# EUROPEAN PATENT SPECIFICATION

(11) **EP 2 728 461 B1**
(45) Date of publication and mention of the grant of the patent: **10.01.2018**
(21) Application number: 13162272.2
(22) Date of filing: 04.04.2013
(51) Int. Cl.: G06F 3/16, G10L 19/00, G06F 17/30

(54) **Audio processing device**
Audioverarbeitungsvorrichtung
Dispositif de traitement audio

(30) Priority: 31.10.2012 TW 101140352
(43) Date of publication of application: 07.05.2014
(73) Proprietor: Acer Incorporated, New Taipei City 221 (TW)
(72) Inventor: Tu, Po-Jen, 221 New Taipei City (TW); Chang, Jia-Ren, 221 New Taipei City (TW); Yu, Ming-Chun, 221 New Taipei City (TW); Tai, Kuei-Ting, 221 New Taipei City (TW)
(74) Representative: Becker Kurig Straus

(56) References cited:
- EP-A2- 2 360 597
- WO-A1-01/86651
- Anonymous: "Circuit Note S/PDIF and I2S Interface for a SigmaDSP Codec. Using the ADAV801/ADAV803 Audio Codec", , 1 October 2011 (2011-10-01), pages 1-4, XP055155281, MA, USA Retrieved from the Internet: URL:http://www.analog.com/static/imported- files/circuit_notes/CN0219.pdf [retrieved on 2014-11-26]
- Anonymous: "ADAU1761 Evaluation Board EVAL-ADAU1761Z", , 1 January 2009 (2009-01-01), pages 1-12, XP055155651, Norwood, MA ,USA Retrieved from the Internet: URL:http://www.analog.com/CN0219-DesignSup port [retrieved on 2014-11-28]

## Description

### BACKGROUND

### Technical Field

The invention relates to a data processing technique. Particularly, the invention relates to an audio processing device implemented by using different audio interfaces.

### Related Art

By using a consumable electronic device (for example, a notebook computer, or a tablet PC), besides that a user can enjoy a good sound and light effect, the user also hopes the electronic device to have more additional functions. For example, the electronic device may have a better audio receiving effect and a recording function capable of filtering environmental noise.

Audio receiving quality of an audio processing technique can be determined according to an applied audio processing algorithm. For example, a high definition audio (HDA) technique provided by the Intel Corporation is mainly applied on electronic devices using central processing units (CPUs) and/or platform controller hubs (PCHs) researched and developed by the Intel Corporation. The audio processing algorithm used by the HDA technique is to use two audio receiving modules disposed in front of a sound source to implement audio receiving and processing. However, since the audio receiving modules have to be disposed in front of the sound source in order to obtain a better audio receiving quality, when the audio receiving modules are far away from the sound source, the audio receiving quality thereof cannot be maintained.

Presently, there is another audio processing algorithm, and according to such audio processing method, microphones are not limited to be disposed in front of the sound source, and two or more than two microphones can be disposed at the back and forth or both sides of the sound source, and the environmental sound/noise can be filtered by detecting amplitudes, frequencies, a phase difference and an audio receiving time difference of the microphones. Therefore, such audio processing method has a wider audio receiving region. However, most of digital signal processors (DSPs) using such audio processing algorithm do not use the HDA interface, but use an integrated interchip sound (I2S) interface, which are hard to be integrated with the CPUs/PCHs developed by the Intel Corporation.

Anonymous: "Circuit Note S/PDIF and I2S Interface for a SigmaDSP Codec. Using the ADAV801/ADAV803 Audio Codec" 1 October 2011 discloses circuit functions and benefits of S/PDIF, a digital audio format. The audio input in S/PDIF format is converted to I2S before processing by the ADAU1761, and the processed audio output in I2S format is converted back to S/PDIF by the ADAV801/ ADAV803. The ADAV801/ ADAV803 has a flexible digital input/output routing matrix that allows it to process audio in either I2 S or S/PDIF format and output it in either format as a master or slave with the use of an onboard SRC (sample rate converter).

Anonymous: "ADAU1761 Evaluation Board EVAL-ADAU1761Z", 1 January2009 explains the design and setup of the ADAU1761 evaluation board. The EVAL-ADAU1761Z includes both single-ended and differential stereo line-level analog audio inputs as well as a digital audio interface. Single-ended and differential analog outputs are also provided, as well as a stereo capless headphone output.

WO 01/86651 A1 discloses an audio processing unit for an integrated audio reproduction system comprising an audio data recovery device for recovering audio data from an audio data source, sound generation apparatus and a user input device for user input of audio processing control data.

EP 2360597 A2 discloses an audio codec for converting digital audio signals to analogue audio signals, the audio codec comprising: at least two digital audio bus interfaces for coupling to respective digital audio buses or bus sections; digital-to-analogue conversion means; adding means; and means to route the combined signal to one of the first and second digital audio bus interfaces of the audio codec.

### SUMMARY

The present invention is provided by appended claim 1. Beneficial embodiments are provided in the dependent claims. Accordingly, the invention is directed to an audio processing device, which is capable of integrating audio interfaces of different types, and audio processing and data conversion between different interfaces are implemented by using a compile unit. The audio processing device is not limited by a predetermined audio interface in an original main processing unit, and is capable of being implemented by an audio digital processor using other types of the audio interface.

The invention provides an audio processing device including a main processing unit, an audio processing unit and a codec. The main processing unit includes a first audio interface. The audio processing unit has a second audio interface. The audio processing unit is controlled by the main processing unit to receive a audio signal from external and process the same. The codec is respectively coupled to the main processing unit and the audio processing unit through the first and the second audio interfaces. The codec converts the audio signal complying with the second audio interface into the audio signal complying with the first audio interface, so as to transfer the audio signal to the main processing unit through the first audio interface. Moreover, the main processing unit processes audio data by using the codec and the audio processing unit.

In an embodiment of the invention, the audio processing device further includes a control unit. The control unit is coupled to the main processing unit and the audio processing unit. The main processing unit controls the audio processing unit to receive the audio signal from external and process the same through a control interface of the control unit.

In an embodiment of the invention, the audio processing device further includes a logic circuit and a clock generator. The logic circuit is coupled to at least one general purpose input output pin, which provides a clock generation signal according to one of a plurality of audio receiving and processing modes selected according to the audio receiving and processing mode signal. The clock generator is coupled to the audio processing unit and the logic circuit, which receives the clock generation signal to determine whether to provide a clock signal to the audio processing unit.

According to the above descriptions, the audio processing device of the invention uses a codec (for example, an audio codec) capable of converting audio data complying with the first audio interface (for example, a high definition audio (HDA) interface) into audio data complying with the second audio interface (for example, an integrated interchip sound (I2S) interface) in mutual ways to serve as a bridge of data conversion between the main processing unit having the first audio interface and the audio processing unit having the second audio interface, so as to integrate the above two units to implement the audio processing. In this way, the audio processing device is not limited by the HDA interface of the original CPU, and any type of the audio digital signal processor can be used to implement different audio processing algorithms without being limited by an original beamforming algorithm.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 and FIG. 2 are respectively a block diagram and a schematic diagram of an electronic device.
FIG. 3 is a schematic diagram of an audio processing device according to a first embodiment of the invention.
FIG. 4 and FIG. 5 are schematic diagrams illustrating configuration positions of audio receiving modules in an audio processing device.
FIG. 6 is a schematic diagram of an audio processing device according to a second embodiment of the invention.
FIG. 7 is a schematic diagram of an audio processing device according to a third embodiment of the invention.

### DETAILED DESCRIPTION OF DISCLOSED EMBODIMENTS

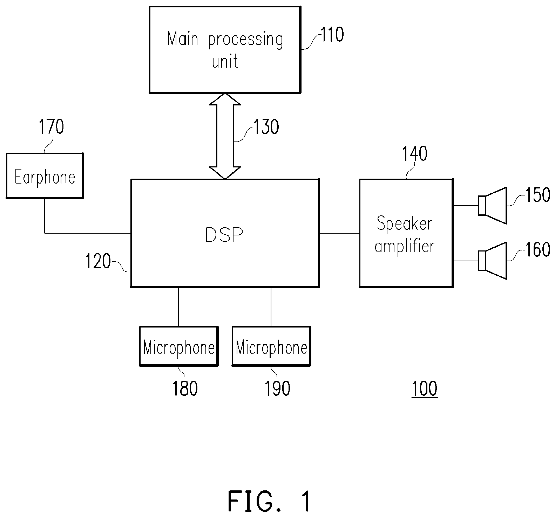

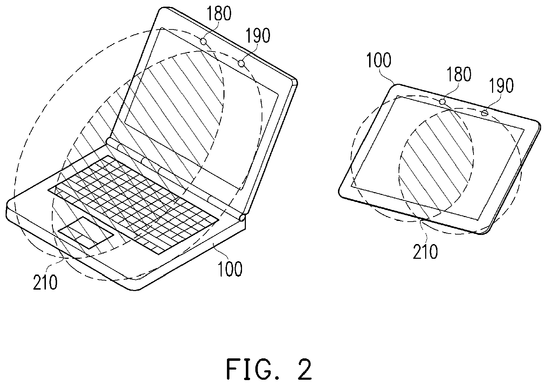

FIG. 1 and FIG. 2 are respectively a block diagram and a schematic diagram of an electronic device 100. As shown in FIG. 1, the electronic device 100 may use a central processing unit (CPU) and/or a platform controller hub (PCH) developed by the Intel Corporation to serve as a main processing unit 110, and the CPU/ PCH is generally an audio digital signal processor 120 using an Intel high definition audio (HDA) technique and an HDA interface 130 thereof for processing audio data. For example, the audio DSP 120 transmits audio data to a speaker amplifier 140 to control audio signals and volumes, etc. of a left and a right channel speakers 150 and 160, and the audio DSP 120 can also control an earphone 170 having a microphone through various signal connection manners (for example, an actual line connection, or a bluetooth connection, etc.)

The audio DSP 120 may receive audio signals through two audio receiving modules (for example, microphones) 180 and 190 disposed on a casing of the electronic device 100, as that shown in FIG. 2. The high definition audio (HDA) technique is to use a beamforming audio algorithm to implement audio processing in audio reception, and the two audio receiving modules 180 and 190 have to be set in a direction facing to a sound source (for example, facing to a user). The electronic devices 100 of FIG. 2 all install two microphones 180 and 190 in the front side, and use audio signals to strengthen a recording effect. However, a better recording environment of the beamforming audio algorithm is only in an overlapped region 210 of the two microphones, and the audio receiving quality of the other region is accordingly decreased. Therefore, when many people want to simultaneously use the electronic device 100 to perform talking or recording, the audio receiving quality is poor.

Presently, there are other better audio processing algorithms, for example, an audio processing algorithm that the environmental sound/noise can be filtered by detecting amplitudes, frequencies, a phase difference and an audio receiving time difference of more than two microphones, by which audio data that is not complied with the phase difference and the audio receiving time difference is regarded as noised and is filtered, and audio data that is complied with the phase difference and the audio receiving time difference is taken as a main sound source signal, such that the microphones can be disposed at any position of the audio processing device without disposing the same right to the front of the electronic device 100, so as to avoid limitation of the HDA technique on a physical position of the audio receiving module. Moreover, the electronic device 100 generally uses a touch panel or glass to serve as a front panel thereof, and if the audio receiving module is disposed in the front of the electronic device 100, it has to drill holes on the glass, which decreases a production yield of the front panel.

However, the DSPs using these audio processing techniques mainly support the I2S interface other than the HDA interface, which cannot be integrated with the CPU/PCH of the Intel Corporation.

Therefore, the audio processing device of the present embodiment uses a codec (for example, an audio codec) capable of converting audio data complying with the first audio interface (for example, the HDA interface) into audio data complying with the second audio interface (for example, the I2S interface, or an AC97 interface) in mutual ways to serve as a bridge of data conversion between the main processing unit having the first audio interface and the unit having the second audio interface. In this way, the audio processing device is not limited by the HDA interface of the original CPU and/or PCH, and can be implemented by DSPs of other audio interfaces (for example, the I2S interface, and the AC97 interface), such that the audio processing device may have greater implementation flexibility.

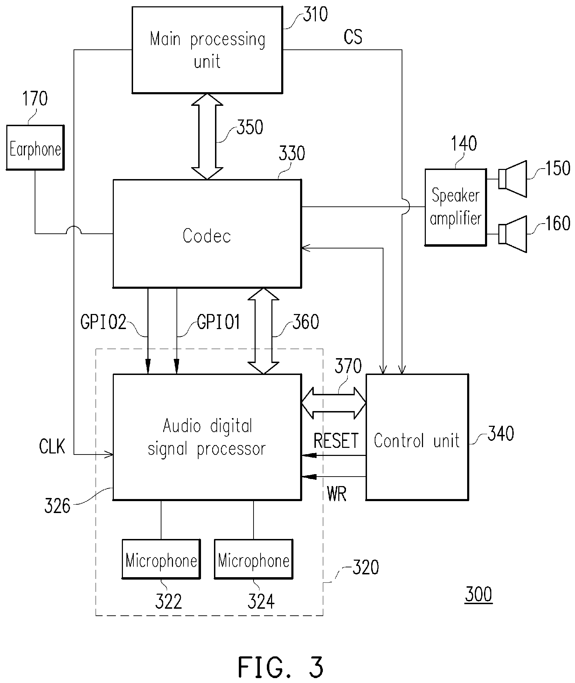

FIG. 3 is a schematic diagram of an audio processing device 300 according to a first embodiment of the invention. The audio processing device 300 is adapted to a consumable electronic device such as a computer system, a notebook computer, a tablet PC, etc. The audio processing device 300 includes a main processing unit 310, an audio processing unit 320 and a codec 330. The audio processing device 300 of the present embodiment may further include a control unit 340, a speaker amplifier 140, a left and a right channel speakers 150 and 160, and an earphone 170 having a microphone.

The main processing unit 310 includes a first audio interface 350 used for processing audio data. The main processing unit 310 of the present embodiment can be a CPU and/or a PCH of the Intel Corporation, and the first audio interface 350 can be implemented by a HDA interface. However, those skilled in the art should understand that the first audio interface 350 is not limited as that disclosed above, and the first audio interface 350 refers to an audio specific processing interface preset in the CPU and/or PCH by a manufacturer, which is, for example, an HDA interface, an AC97 audio interface, a super audio CD (SACD) interface, etc.

The audio processing unit 320 includes a second audio interface 360 different to the first audio interface 350. The audio processing unit 320 of the present embodiment can be implemented by at least two audio receiving modules (for example, microphones 322 and 324) and an audio DSP 326 having the second audio interface 360. The at least two audio receiving modules can be respectively installed at different positions on a casing of the audio processing device 300.

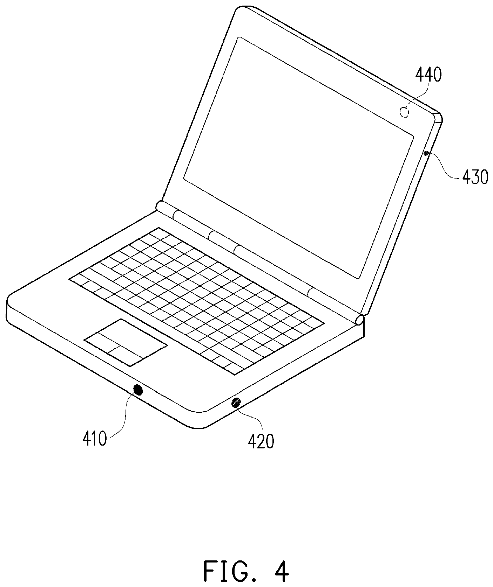

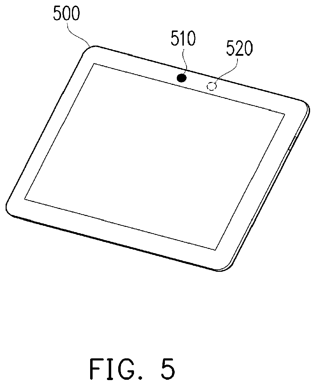

FIG. 4 and FIG. 5 are schematic diagrams illustrating configuration positions of the audio receiving modules in the audio processing device 300. As shown in FIG. 4, if the audio processing device 300 is implemented in a notebook computer 400, the audio receiving modules can be disposed at positions 410, 420 and 430 on sides of the casing of the notebook computer 400, or at a position 440 on the back of the casing of the notebook computer 400, and two or more than two of the positions can selected to configure the audio receiving modules, for example, the positions 410 and 420 can be selected for one implementation, and the positions 430 and 440 can be selected for another implementation. As shown in FIG. 5, if the audio processing device 300 is implemented in a tablet PC 500, one of the microphones can be disposed at a position 510 on a front panel of the tablet PC 500, and another microphone can be disposed at a position 520 on the back of the casing of the tablet PC 500.

Referring to FIG. 3, the audio DSP 326 is coupled to the at least two microphones 322 and 324. The audio DSP 326 in the audio processing unit 320 is controlled by the main processing unit 310 through the control unit 340, which receives a audio signal from external and processes the same according to an instruction of the main processing unit 310. In detail, when the audio DSP 326 receives an audio receiving instruction through the control unit 340 and the control interface (for example, the I2C interface 370), it receives the audio signals of the microphones 322 and 324, and processes the audio signal according to comparison conditions of amplitudes, a phase difference, an audio receiving time difference, etc. of the two or more than two audio signals by using an inbuilt audio processing algorithm and a following audio receiving and processing mode, and transmits the audio signal to the codec 330 through the second audio interface 360.

The codec 330 is coupled to the main processing unit 310 through the first audio interface 350 (the HDA interface), and is coupled to the audio processing unit 320 through the second audio interface 360 (for example, the I2S interface). Namely, the main processing unit 310 and executed application programs thereof can be notified to the codec 330 through the first audio interface (HDA interface) 350. When the audio DSP 326 transmits the audio signal to the codec 330 through the second audio interface 360, the codec 330 converts the audio signal complying with the second audio interface 360 into a audio signal complying with the first audio interface 350 according to a current audio processing mode, and transmits the converted audio signal to the main processing unit 310 for subsequent processing through the first audio interface 350. Moreover, the main processing unit 310 processes audio data by using the codec 330 and the audio processing unit 320. In the present embodiment, besides that the codec 330 is coupled to the audio processing unit 320 through the second audio interface 360, it is also coupled to the audio processing unit 320 through at least one general purpose input output pin (for example, general purpose input output pins GPIO1 and GPIO2), and the codec 330 can transmit an audio receiving and processing mode signal through the general purpose input output pins GPIO1 and GPIO2, where the audio receiving and processing mode and the corresponding audio receiving and processing mode signal are described later.

The audio processing device 300 can be implemented by an audio codec using the first audio interface 350 and the second audio interface 360. In other words, the codec 330 can be an audio codec capable of converting the audio data complying with the first audio interface 350 into the audio data complying with the second audio interface 360 in mutual ways. On the other hand, besides serving as a data conversion bridge between the man processing unit 310 and the audio processing unit 320, the audio codec can also be used to decode the audio data provided by the main processing unit 310, and convert the same into an audio signal that can be played by the speaker amplifier 140 or the earphone 170, such that the audio processing device 300 can play music or recorded files.

The control unit 340 is coupled to the main processing unit 310 and the audio DSP 326 of the audio processing unit 320. The control unit 340 controls the audio DSP 326 through the control interface 370, and the control unit 340 is connected to a reset pin RESET and a wakeup pin WR of the audio DSP 326. The control unit 340 receives a control signal CS from the main processing unit 310 to determine whether or not to activate the audio DSP 326 or switch it into a sleeping mode. For example, if the control signal CS has a low level, the control unit 340 switches the audio DSP 326 into the sleeping mode through the control interface 370. If the control signal CS has a high level, the control unit 340 can wakeup and activate the audio DSP 326 through the wakeup pin WR. The control unit 340 can also enable the reset pin RESET to reset the audio DSP 326. In the present embodiment, an embedded chip (EC) is used to implement the control unit 340, and the embedded chip can be used to initialize related software and hardware on a consumable electronic device such as a computer system, or a notebook computer, etc. that uses the audio processing device 300 during booting thereof. The control unit 340 can also be implemented by a complex programmable logic device (CPLD), etc., which is not limited to the embedded chip.

The main processing unit 310 controls the audio DSP 326 through the control interface 370 of the control unit 340, so as to control the audio processing unit 320 to receive the audio signal from the external microphones 322 and 324 and process the same. The control interface 370 can be an I2C interface.

A method that the main processing unit 310 processes audio data by using the codec 330 and the audio processing unit 320 is described below. Based on an application requirement of the user, in the audio DSP 326 and the codec 330, it is first determined whether an environmental sound and noise of the audio signal is filtered according to the application requirement, and then the audio signal is transmitted to the main processing unit 310. In the present embodiment, audio receiving usages are integrated into a plurality of audio receiving and processing modes, for example, a calling mode, a voice recognizing mode and a recording mode, etc. The calling mode is used to make a phone call or network communication with others through the audio processing device 300, such that it is probably required to eliminate the environmental sound and avoid occurrence of a feedback sound. The voice recognizing mode is used to strongly eliminate the environmental sound and noise, and only maintain the audio of human voice, so as to avoid error during voice recognition. In the recording mode, the environmental sound is also recorded to achieve to complete recording.

Since the audio DSP 326 requires to know the audio receiving and processing mode, the control unit 340 stores encoded files that can be provided to the audio DSP 326, and when the audio processing unit 320 is booted, the control unit 340 downloads the encoded files to the audio DSP 326 for utilization. In other words, the audio DSP 326 of the audio processing unit 320 reads the encoded files from the control unit 340 when the audio DSP 326 is initialized or reset, so as to respectively set the audio receiving and processing modes, and wait for the audio receiving and processing mode signal transmitted from the main processing unit 310 through the first audio interface 350 and the two general purpose input output pins GPIO1 and GPIO2 of the codec 330. The codec 330 obtains the audio receiving and processing mode signal form the main processing unit 310 through the first audio interface 350, and transmits the audio receiving and processing mode signal to the audio processing unit 320 through the general purpose input output pins GPIO1 and GPIO2. The audio DSP 326 can select one of the audio receiving and processing modes according to the audio receiving and processing mode signal to serve as an audio processing basis of the subsequent audio signal.

A relationship between the audio receiving and processing mode signals transmitted by the general purpose input output pins GPIO1 and GPIO2 and the audio receiving and processing modes is as that shown in a following table (1):

**Table (1)**

| | GPIO1 | GPIO2 | Audio receiving and processing mode |
|---|---|---|---|
| Logic | 0 | 0 | Sleeping mode |
| Logic | 0 | 1 | Calling mode |
| Logic | 1 | 0 | Voice recognizing mode |
| Logic | 1 | 1 | Recording mode |

The sleeping mode represents that it is unnecessary to use the audio DSP 326, such that the audio DSP 326 is in the sleeping mode to save power. In this way, when the main processing unit 310 maintains the control signal CS to the low level, and transmits two logic "0" through the general purpose input output pins GPIO1 and GPIO2, the audio DSP 326 is in the sleeping mode. When the main processing unit 310 sets the control signal CS to a high level, and the general purpose input output pins GPIO1 and GPIO2 are respectively (logic "0"; logic "1"), (logic "1"; logic "0") or (logic "1"; logic "1"), the audio receiving and processing mode of the audio DSP 326 is respectively the calling mode, the voice recognizing mode or the recording mode.

In the present embodiment, the codec 330 can be coupled to the control unit 340, and when the main processing unit 310 is about to switch the audio DSP 326 to the sleeping mode, besides maintaining the control signal CS to the low level, the main processing unit 310 can notify the control unit 340 through the codec 330, so as to switch the audio DSP 326 into the sleeping mode through the control interface 370. When the main processing unit 310 is about to wakeup the audio DSP 326, besides maintaining the control signal CS to the low level, the main processing unit 310 can notify the control unit 340 through the codec 330, so as to wakeup and activate the audio DSP 326 through the wakeup pin WR.

On the other hand, the audio DSP 326 has to use a clock signal CLK of a specific frequency to implement audio reception, for example, a clock signal of 24MHz or 12MHz. If the main processing unit 310 can provide the required clock signal CLK, it can be directly provided by the main processing unit 310. However, if the main processing unit 310 or other device cannot provide the clock signal CLK of the specific frequency, a clock generator is additionally configured to provide the clock signal CLK.

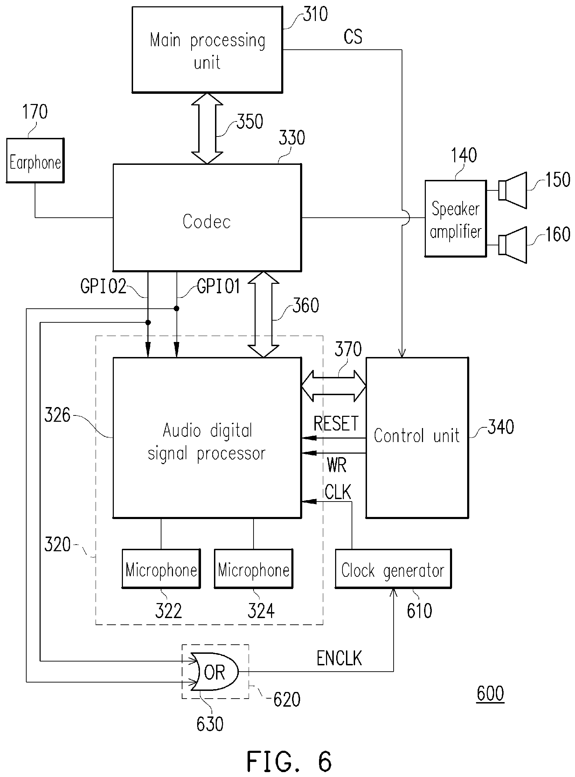

FIG. 6 is a schematic diagram of an audio processing device 600 according to a second embodiment of the invention. A main difference between the first embodiment and the second embodiment is that the audio processing device 600 of FIG. 6 further includes a logic circuit 620 and a clock generator 610, and the clock signal CLK of the audio DSP 326 is provided by the clock generator 610. In detail, the logic circuit 620 is coupled to the general purpose input output pins GPIO1 and GPIO2, and provides a clock generation signal ENCLK according to one of audio receiving and processing modes selected according to the audio receiving and processing mode signal. The clock generator 610 is coupled to the audio DSP 326 of the audio processing unit 320 and the logic circuit 620, which receives the clock generation signal ENCLK to determine whether or not to provide the clock signal CLK to the audio processing unit 320.

The logic circuit 620 of the present embodiment is implemented by an OR gate 630. According to the above table (1), it is known that when the audio DSP 326 is in the sleeping mode, i.e. when the general purpose input output pins GPIO1 and GPIO2 are all logic "0", the clock generation signal ENCLK has the low level, and the clock generator 610 stops providing the clock signal CLK to save power.

When the audio DSP 326 is in the other operation modes, i.e. when at least one of the general purpose input output pins GPIO1 and GPIO2 is logic "1", the clock generation signal ENCLK has the high level, and the clock generator 610 can continually provide the clock signal CLK to maintain the operation of the audio DSP 326.

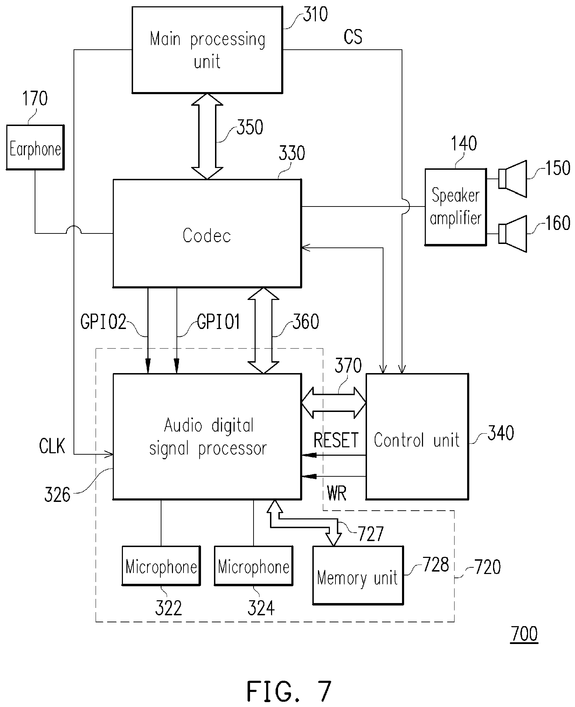

Since the control unit 340 of the invention is implemented by the embedded chip used in consumable electronic device during a booting process thereof, though the embedded chip is required to execute a large amount of functions and initialize the various software and hardware devices during booting of the consumable electronic device, the booting process of the consumable electronic device is prolonged. Therefore, a third embodiment is provided to resolve the above problem. FIG. 7 is a schematic diagram of an audio processing device 700 according to the third embodiment of the invention. Referring to FIG. 7, a main difference between the third embodiment and the first embodiment is that in order to decrease a data amount to be processed by the control unit 340, in the audio processing device 700, a memory unit 728 is additionally added in an audio processing unit 720, where the memory unit 728 stores encoded files required by the audio DSP 326 during the booting process. Namely, in the first embodiment, the encoded files are stored in the control unit 340, and in the third embodiment, the encoded files are stored in the memory unit 728 of the audio processing unit 720.

In this way, when the audio DSP 326 of FIG. 7 is initialized, the control unit 340 sends an instruction to the audio DSP 326 through the control interface 370, and the audio DSP 326 obtains the required encoded files from the memory unit 728 through a data transmission interface 727 (for example, an I2C interface). In the present embodiment, an electrically-erasable programmable read-only memory (EEPROM) is used to implement the memory unit 728, however, those skilled in the art should understand that other device having a storage function can also be used to implement the memory unit 728.

Therefore, when the audio processing device 700 executes a related application program to use the audio receiving function, it transmits an audio instruction to the codec 330 through the first audio interface (HDA interface) 350. Now, the main processing unit 310 provides the clock signal CLK to the audio DSP 326 of the audio processing unit 720 through the first audio interface (HDA interface) 350. In this way, the codec 330 processes audio signals related to the earphone 170 and the speakers 150 and 160, and the audio DSP 326 processes audio signals related to the microphones 322 and 324.

The audio DSP 326 itself may also have a power saving function, namely, since the two general purpose input output pins GPIO1 and GPIO2 are used to switch the aforementioned audio receiving and processing modes (referring to the table (1)), the audio DSP 326 enters the sleeping mode as long as it receives a signal corresponding to the sleeping mode. Comparatively, when the audio DSP 326 receives a signal corresponding to a mode other than the sleeping mode, it is woken up to execute a corresponding function.

When the audio DSP 326 is initialized, the control unit 340 can also only control the data transmission interface 727 to download a part of important encoded files to the audio DSP 326, and the audio DSP 326 can use these encoded files to wakeup the memory unit 728. Then, the audio DSP 326 can download other encoded files from the memory unit 728, and after downloading of the encoded files is completed, the memory unit 728 enters the sleeping mode to save power. Moreover, if it is unnecessary to use the microphones 322 and 324 to receive audio signals, the audio DSP 326 can also enter the sleeping mode. In summary, the audio processing device of the invention uses a codec (for example, an audio codec) capable of converting audio data complying with the first audio interface (for example, the HDA interface) into audio data complying with the second audio interface (for example, the I2S interface) in mutual ways to serve as a bridge of data conversion between the main processing unit having the first audio interface and the audio processing unit having the second audio interface, so as to integrate the above two units to implement the audio processing. In this way, the audio processing device is not limited by the HDA interface of the original CPU, and any type of the audio DSP can be used to implement different audio processing algorithms without being limited by an original beamforming algorithm.

Moreover, the beamforminng algorithm requires disposing the audio receiving modules (microphones) in the front of the sound source, though if other better audio processing algorithm is used, the microphones do not have to be disposed at specific locations. Therefore, configuration of the microphones can be more flexible, and when the audio processing device uses the touch panel for operations, problems of reductions in a glass yield and price caused by drilling holes on the front side of the touch panel are avoided, and noise suppression during audio reception can be implemented in the region around the audio processing device.

## Claims

1. An audio processing device (300), comprising:
a main processing unit (310), comprising a first audio interface (350);
an audio processing unit (320), comprising a second audio interface (360), wherein the audio processing unit (320) is controlled by the main processing unit (310) to receive an audio signal and process the same;
the audio processing device (300) further comprising:
a control unit (340), coupled to the main processing unit (310) and the audio processing unit (320), wherein the main processing unit (310) controls the audio processing unit (320) to receive the audio signal and process the same through a control interface (370) of the control unit (340), wherein the audio processing unit (320) reads an encoded file from the control unit (340) to set a plurality of audio receiving and processing modes; and
a codec (330), respectively coupled to the main processing unit (310) through the first audio interface (350) and coupled to the audio processing unit (320) through the second audio interface (360), wherein the codec (330) converts the audio signal complying with the second audio interface (360) into a converted audio signal complying with the first audio interface (350), so as to transfer the converted audio signal to the main processing unit (310), and the main processing unit (310) processes audio data by using the codec (330) and the audio processing unit (320), and **characterized in that** :
the codec (330) is coupled to the audio processing unit (320) through at least one general purpose input output pin (GPIO1, GPIO2) and the second audio interface (360),
wherein the codec (330) obtains an audio receiving and processing mode signal from the main processing unit (310) through the first audio interface (350), and transmits the audio receiving and processing mode signal to the audio processing unit (320) through the at least one general purpose input output pin (GPIO1, GPIO2), so as to control the audio processing unit (320) to select one of the audio receiving and processing modes.

2. The audio processing device (300) as claimed in claim 1, further comprising:
a logic circuit (620), coupled to the at least one general purpose input output pin (GPIO1, GPIO2), and providing a clock generation signal (ENCLK) according to one of the audio receiving and processing modes selected according to the audio receiving and processing mode signal; and
a clock generator (610), coupled to the audio processing unit (320) and the logic circuit (620), for receiving the clock generation signal (ENCLK) to determine whether to provide a clock signal(CLK) to the audio processing unit.

3. The audio processing device (300) as claimed in claim 1, wherein the control unit (340) is an embedded chip.

4. The audio processing device (300) as claimed in claim 1, wherein the clock signal (CLK) of the audio processing unit (320) is provided by the main processing unit (310).

5. The audio processing device (300) as claimed in claim 1, wherein the audio processing unit (320) comprises:
at least two audio receiving modules (322, 324), respectively disposed at different positions on the audio processing device (320); and
an audio digital signal processor (326), coupled to the at least two audio receiving modules (322, 324) to receive and process the audio signal.

6. The audio processing device (300) as claimed in claim 5, wherein the audio processing unit (320) further comprises:
a memory unit (728), coupled to the audio digital signal processor (326) through a data transmission interface (727) for storing encoded data,
wherein when the control unit (340) initializes the audio digital signal processor (326), the control unit (340) controls the audio digital signal processor (326) to download the encoded data from the memory unit (728).

7. The audio processing device (300) as claimed in claim 1, wherein the codec (330) is an audio codec capable of converting audio data complying with the first audio interface (350) into audio data complying with the second audio interface (360).

8. The audio processing device (300) as claimed in claim 1, wherein the main processing unit (310) is a central processing unit (CPU) and/or a platform controller hub (PCH) of the Intel Corporation, the first audio interface (350) is a high definition audio (HDA) interface, and the second audio interface (360) is an integrated interchip sound (I2S) interface.

## Patentansprüche

1. Audioverarbeitungsvorrichtung (300), umfassend:
eine Hauptverarbeitungseinheit (310), die eine erste Audio - Schnittstelle (350) umfasst;
eine Audioverarbeitungseinheit (320), die eine zweite Audioschnittstelle (360) umfasst, wobei die Audioverarbeitungseinheit (320) von der Hauptverarbeitungseinheit (310) gesteuert wird, um ein Audiosignal zu empfangen und dieses zu verarbeiten;
wobei die Audioverarbeitungsvorrichtung (300) weiterhin umfasst:
eine Steuereinheit (340), die mit der Hauptverarbeitungseinheit (310) und der Audioverarbeitungseinheit (320) gekoppelt ist, wobei die Hauptverarbeitungseinheit (310) die Audioverarbeitungseinheit (320) steuert, um das Audiosignal zu empfangen und dieses zu verarbeiten, durch eine Steuerschnittstelle (370) der Steuereinheit (340), wobei die Audioverarbeitungseinheit (320) eine codierte Datei von der Steuereinheit (340) liest, um eine Vielzahl von Audio - Empfangs- und Verarbeitungsmodi einzustellen; und
einen Codec (330), der jeweils durch die erste Audio - Schnittstelle (350) mit der Hauptverarbeitungseinheit (310) gekoppelt ist und durch die zweite Audio - Schnittstelle (360) mit der Audioverarbeitungseinheit (320) gekoppelt ist, wobei der Codec (330) das Audiosignal, das der zweiten Audioschnittstelle (360) entspricht, in ein umgewandeltes Audiosignal umwandelt, das der ersten Audio - Schnittstelle (350) entspricht, um so das umgewandelte Audiosignal an die Hauptverarbeitungseinheit (310) zu übertragen und wobei die Hauptverarbeitungseinheit (310) Audiodaten durch Verwendung des Codec (330) und der Audioverarbeitungseinlteit (320) verarbeitet, **dadurch gekennzeichnet, dass**
der Codec (330) mit der Audioverarbeitungseinheit (320) gekoppelt ist durch mindestens einen Allzweckeingabe-Ausgabe-Pin (GPIO1, GPIO2) und die zweite Audio - Schnittstelle (360),
wobei der Codec (330) ein Audioempfangs- und Verarbeitungsmodussignal von der Hauptverarbeitungseinheit (310) über die erste Audioschnittstelle (350) erhält und das Audioempfangs- und Verarbeitungsmodussignal an die Audioverarbeitungseinheit (320) durch den mindestens einen Allzweckeingabe-Ausgabe-Pin (GPIO1, GPIO2) überträgt, um so die Audioverarbeitungseinheit (320) zu steuern, um einen der Audioempfangs- und Verarbeitungsmodi auszuwählen.

2. Audioverarbeitungsvorrichtung (300) gemäß Anspruch 1, weiterhin umfassend:
eine Logikschaltung (620), die mit dem mindestens einen Allzweckeingabe-Ausgabe-Pin (GPIO1, OPIO2) gekoppelt ist und ein Takterzeugungssignal (ENCLK) gemäß einem der Audioempfangs- und Verarbeitungsmodi bereitstellt, ausgewählt gemäß dem Audioempfangs- und Verarbeitungsmodussignal; und
einen Taktgenerator (610), der mit der Audioverarbeitungseinheit (320) und der Logikschaltung (620) gekoppelt ist zum Empfangen des Takterzeugungssignals (ENCLK), um zum Bestimmen, ob ein Taktsignal (CLK) an die Audioverarbeitungseinheit bereitgestellt wird.

3. Audioverarbeitungsvorrichtung (300) gemäß Anspruch 1, wobei die Steuereinheit (340) ein eingebetteter Chip ist.

4. Audioverarbeitungsvorrichtung (300) gemäß Anspruch 1, wobei das Taktsignal (CLK) der Audioverarbeitungseinheit (320) durch die Hauptverarbeitungseinheit (310) bereitgestellt wird.

5. Audioverarbeitungsvorrichtung (300) gemäß Anspruch 1, wobei die Audioverarbeitungseinheit (320) umfasst:
mindestens zwei Audioempfangsmodule (322, 324), die jeweils an verschiedenen Positionen an der Audio - Verarbeitungsvorrichtung (320) angeordnet sind; und
einen Audio - Digitalsignalprozessor (326), der mit den mindestens zwei Audioempfangsmodulen (322, 324) gekoppelt ist, um das Audiosignal zu empfangen und zu verarbeiten.

6. Audioverarbeitungsvorrichtung (300) gemäß Anspruch 5, wobei die Audioverarbeitungseinheit (320) weiterhin umfasst:
eine Speichereinheit (728), die mit dem Audio - Digitalsignalprozessor (326) gekoppelt ist durch eine Datenübertragungsschnittstelle (727) zum Speichern der codierten Daten,
wobei, wenn die Steuereinheit (340) den Audio - Digitalsignalprozessor (326) initialisiert, die Steuereinheit (340) den Audio - Digitalsignalprozessor (326) steuert die codierten Daten von der Speichereinheit (728) herunterzuladen.

7. Audioverarbeitungsvorrichtung (300) gemäß Anspruch 1 , wobei der Codec (330) ein Audio-Codec ist, der in der Lage ist, Audiodaten, die der ersten Audio - Schnittstelle (350) entsprechen, in Audiodaten umzuwandeln, die der zweiten Audio - Schnittstelle (360) entsprechen.

8. Audioverarbeitungsvorrichtung (300) gemäß Anspruch 1, wobei die Hauptverarbeitungseinheit (310) eine zentrale Verarbeitungseinheit (CPU) und / oder ein Plattform - Controller - Hub (PCH) der Intel Corporation ist, wobei die erste Audio - Schnittstelle (350) ein High - Definition - Audio(HDA) -Schnittstelle ist und wobei die zweite Audio - Schnittstelle (360) eine integrierter-Interchip - Sound (I2S) -Schnittstelle ist.

## Revendications

1. Dispositif de traitement audio (300), comprenant :
une unité de traitement principal (310), comprenant une première interface audio (350) ;
une unité de traitement audio (320), comprenant une seconde interface audio (360), dans lequel l'unité de traitement audio (320) est commandée par l'unité de traitement principal (310) afin de recevoir un signal audio et traiter ce dernier ;
le dispositif de traitement audio (300) comprenant en outre :
une unité de commande (340), couplée à l'unité de traitement principal (310) et l'unité de traitement audio (320), dans lequel l'unité de traitement principal (310) commande l'unité de traitement audio (320) afin de recevoir le signal audio et traiter ce dernier par l'intermédiaire d'une interface de commande (370) de l'unité de commande (340), dans lequel l'unité de traitement audio (320) lit un fichier codé provenant de l'unité de commande (340) afin de régler une pluralité de modes de réception et de traitement audio ; et
un codec (330), couplé respectivement à l'unité de traitement principal (310) par l'intermédiaire de la première interface audio (350) et couplé à l'unité de traitement audio (320) par l'intermédiaire de la seconde interface audio (360), dans lequel le codec (330) convertit le signal audio en conformité avec la seconde interface audio (360) en un signal audio converti en conformité avec la première interface audio (350), de manière à transférer le signal audio converti à l'unité de traitement principal (310) et l'unité de traitement principal (310) traite des données audio en utilisant le codec (330) et l'unité de traitement audio (320), et **caractérisé en ce que** :
le codec (330) est couplé à l'unité de traitement audio (320) par l'intermédiaire d'au moins une broche d'entrée sortie universelle (GPIO1, GPIO2) et la seconde interface audio (360),
dans lequel le codec (330) obtient un signal de mode de réception et traitement audio provenant de l'unité de traitement principal (310) par l'intermédiaire de la première interface audio (350) et transmet le signal de mode de réception et traitement audio à l'unité de traitement audio (320) par l'intermédiaire d'au moins une broche d'entrée sortie universelle (GPIO1, GPIO2) de manière à commander l'unité de traitement audio (320) pour sélectionner un des modes de réception et traitement audio.

2. Dispositif de traitement audio 300 selon la revendication 1, comprenant en outre :
un circuit logique (620), couplé à au moins une broche d'entrée sortie universelle (GPIO1, GPIO2) et fournissant un signal de génération d'horloge (ENCLK) selon un des modes de réception et traitement audio sélectionné conformément au signal de mode de réception et traitement audio ; et
un générateur d'horloge (610), couplé à l'unité de traitement audio (320) et au circuit logique (620), pour recevoir le signal de génération d'horloge (ENCLK) afin de déterminer si fournir un signal d'horloge (CLK) à l'unité de traitement audio.

3. Dispositif de traitement audio (300) selon la revendication 1, dans lequel l'unité de commande (340) est une puce incorporée.

4. Dispositif de traitement audio (300) selon la revendication 1, dans lequel le signal d'horloge (CLK) de l'unité de traitement audio (320) est fourni par l'unité de traitement principal (310).

5. Dispositif de traitement audio (300) selon la revendication 1, dans lequel l'unité de traitement audio (320) comprend :
au moins deux modules de réception audio (322,324), disposés respectivement à des positions différentes sur le dispositif de traitement audio (320) ; et un processeur de signal numérique audio (326), couplée à au moins deux modules de réception audio (322,324) afin de recevoir et traiter le signal audio.

6. Dispositif de traitement audio (300) selon la revendication 5, dans lequel l'unité de traitement audio (320) comprend en outre :
une unité de mémoire (728), couplée au processeur de signal numérique audio (326) par l'intermédiaire d'une interface de transmission de données (727) pour mémoriser des données codées,
dans lequel lorsque l'unité de commande (340) initialise le processeur de signal numérique audio (326), l'unité de commande (340) commande le processeur de signal numérique audio (326) pour télécharger les données codées de l'unité de mémoire (728).

7. Dispositif de traitement audio (300) selon la revendication 1, dans lequel le codec (330) est un codec audio capable de convertir des données audio en conformité avec la première interface audio (350) en données audio en conformité avec la seconde interface audio (360).

8. Dispositif de traitement audio (300) selon la revendication 1, dans lequel l'unité de traitement principal (310) est une unité centrale (CPU) et/ou un hub de contrôleur de plate-forme (PCH) de Intel Corporation, la première interface audio (350) est une interface audio à haute définition HDA et la seconde interface audio 360 est une interface sonore interpuce (I2S) intégrée.
